(19) Europäisches Patentamt
European Patent Office
Office européen des brevets

(11) Veröffentlichungsnummer: **0 079 859**
**A1**

(12) # EUROPÄISCHE PATENTANMELDUNG

(21) Anmeldenummer: **82810482.8**

(22) Anmeldetag: **11.11.82**

(51) Int. Cl.³: **C 08 K 5/00**
C 08 K 5/23, C 09 B 43/132

(30) Priorität: **18.11.81 CH 7411/81**

(43) Veröffentlichungstag der Anmeldung:
**25.05.83 Patentblatt 83/21**

(84) Benannte Vertragsstaaten:
**CH DE FR GB IT LI**

(71) Anmelder: **CIBA-GEIGY AG**
**Patentabteilung Postfach**
**CH-4002 Basel(CH)**

(72) Erfinder: **Wick, Arnold, Dr.**
**Dahlienstrasse 5**
**CH-4106 Therwil(CH)**

(54) **Verfahren zum Färben von organischen Polymeren in der Masse.**

(57) Verbindungen der Formel

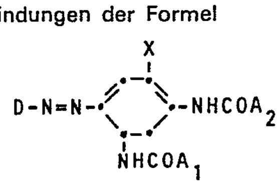

worin die Symbole D, X, $A_1$ und $A_2$ die im Patentanspruch 1 angegebene Bedeutung haben, eignen sich zum Färben von organischen Polymeren in der Masse.

EP 0 079 859 A1

0079859

CIBA-GEIGY AG
Basel (Schweiz)

3-13674/+

# Verfahren zum Färben von organischen Polymeren in der Masse

Die Erfindung betrifft das Färben von organischen Polymeren in der Masse mit ausgewählten Azofarbstoffen und die mit diesen Farbstoffen gefärbten organischen Polymeren.

Zur Massefärbung von organischen Polymeren, insbesondere von Polyestern, wurden bisher die Farbstoffe in der Regel aus bekannten Azofarbstoffklassen ausgewählt, vor allem aus der Gruppe textiler Dispersionsfarbstoffe. So sind in der GB-A 2,030,165 und GB-A 2,030,166 Monoazodispersionsfarbstoffe mit sekundären Aminen als Kupplungskomponenten beschrieben, die zur Massefärbung von synthetischen Textilmaterialien, insbesondere von Polyestern verwendet werden können. Doch weisen solche Farbstoffe vor allem bei der Massefärbung von Polyestern eine zu geringe Trockenhitze-, Reib- und Ausblutbeständigkeit,vor, während oder nach der Thermofixierung des gefärbten Polymeren,und eine ungenügende Hitzebeständigkeit bei der Verarbeitung auf.

Es zeigte sich nun, dass einfache Azofarbstoffe, die als Dispersionsfarbstoffe oder Pigmente ohne Bedeutung sind, sich hervorragend zur Massefärbung von organischen Polymeren, insbesondere Polyestern und Polyamiden eignen. Diese Azofarbstoffe zeichnen sich vor allem durch eine ausgezeichnete Thermostabilität aus.

Die Erfindung betrifft somit ein Verfahren zum Färben von organischen Polymeren in der Masse, dadurch gekennzeichnet, dass man eine Verbindung der Formel I verwendet

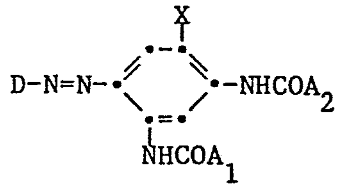 (I),

worin D den Rest einer carbocyclischen aromatischen oder heterocyclischen aromatischen Diazokomponente bedeutet, X Wasserstoff, Halogen, Methyl oder Methoxy bedeutet, und $A_1$ und $A_2$ unabhängig voneinander $C_1$-$C_6$-Alkyl, unsubstituiertes oder durch Halogen, $C_1$-$C_4$-Alkyl, Methoxy, Aethoxy, Phenyl oder Phenoxy substituiertes Phenyl bedeuten.

Die Diazokomponente, von der sich D ableitet, kann unsubstituiert oder substituiert sein. Mögliche Substituenten sind beispielsweise Halogen, $C_1$-$C_6$-Alkyl, $C_1$-$C_6$-Alkoxy, Trifluormethyl, Cyano, Nitro, unsubstituiertes Phenyl, unsubstituiertes Phenoxy, oder durch Halogen, $C_1$-$C_6$-Alkyl, $C_1$-$C_6$-Alkoxy, Trifluormethyl oder Phenylazo substituiertes Phenyl oder Phenoxy.
Beispiele von Diazokomponenten, von denen sich D ableitet sind Anilin, 2-Toluidin, 3-Toluidin, 4-Toluidin, 2-Aethylanilin, 3-Aethylanilin, 4-Aethylanilin, 2,3-Dimethylanilin, 2,4-Dimethylanilin, 2,5-Dimethylanilin, 3,4-Dimethylanilin, 2-Chloranilin, 3-Chloranilin, 4-Chloranilin,2,3-Dichloranilin, 2,4-Dichloranilin, 2,5-Dichloranilin, 3,4-Dichloranilin, 3,5-Dichloranilin, 2,4,5-Trichloranilin, 2,3,4-Trichloranilin, 3,4,5-Trichloranilin, 2-Methyl-3-chloranilin, 2-Methyl-4-chloranilin, 2-Methyl-5-chloranilin, 3-Chlor-4-methylanilin, 3-Chlor-4,6-dimethylanilin, 3-Chlor-4-methoxyanilin, 3-Chlor-6-methoxyanilin, 4-Methoxyanilin, 2-Methyl-4-methoxyanilin, 2-Methoxy-5-methylanilin 4-Aethoxyanilin, 4-Phenoxyanilin, 4-(4'-Chlorphenoxy)-anilin, 4-Aminobenzoesäuremethylamid, 2-Trifluormethylanilin, 3-Trifluormethylanilin, 4-Trifluormethylanilin, 2-Chlor-5-trifluormethylanilin, 2,4-Dimethoxy-5-chloranilin, 2,5-Dimethoxy-4-chloranilin, 2-Aminobenzonitril, 3-Aminobenzonitril, 4-Aminobenzonitril, 2-Cyan-4-chloranilin, 4-Aminoacetanilid, 4-Aminoazobenzol, 1-Aminonaphthalin, 2-Amino-6-methoxybenzthiazol, 2-Amino-6-äthoxybenzthiazol, 2-Amino-6-chlorbenzthiazol, 2-Amino-3-cyano-4-methylthiophen-6-carbonsäuremethylester, 5-Amino-3-phenyl-1,2,4-thiadiazol, 2-Amino-5-phenyl-1,3,4-thiadiazol, 2-Aminobenzimidazol, 2-Amino-1-methylbenzimidazol und 2-Amino-1-äthylbenzimidazol.

In den Definitionen von D, X, $A_1$ und $A_2$ vorkommendes Halogen kann beispielsweise Fluor, Chlor oder Brom, vorzugsweise Chlor bedeuten.

In den Definitionen von D, $A_1$ und $A_2$ vorkommendes $C_1$-$C_6$-Alkyl kann geradkettig oder verzweigt sein und insbesondere Methyl, Aethyl, Isopropyl, sec.-Butyl, tert.-Butyl, tert.-Amyl oder n-Hexyl sein.

$C_1$-$C_4$-Alkyl in den Definitionen von $A_1$ und $A_2$ kann geradkettig oder verzweigt sein und insbesondere Methyl, Aethyl, Isopropyl, sec.-Butyl oder tert.-Butyl sein.

$C_1$-$C_6$-Alkoxy in der Definition von D kann geradkettig oder verzweigt sein und insbesondere Methoxy, Aethoxy, Propoxy, Isopropoxy, n-Butoxy, n-Pentoxy oder n-Hexyloxy sein.

In bevorzugten Verbindungen der Formel I bedeutet D den Rest einer carbocyclischen aromatischen Diazokomponente, insbesondere Phenyl. Phenyl als Bedeutung von D ist insbesondere mit Methyl, Aethyl, Methoxy, Aethoxy, Phenoxy, Chlor, Cyano, Nitro, Phenylazo oder Trifluormethyl substituiert. Sind zwei Substituenten am Phenylrest vorhanden, ist einer vor allem Methyl oder Chlor, während der andere eine der genannten Bedeutungen einnehmen kann.

Somit verwendet man im erfindungsgemässen Verfahren bevorzugt Verbindungen der Formel I, worin D unsubstituiertes oder durch ein bis zwei gleiche oder verschiedene Substituenten der Gruppe bestehend aus Halogen, $C_1$-$C_6$-Alkyl, $C_1$-$C_6$-Alkoxy, Phenoxy, Cyano, Nitro, Phenylazo und Trifluormethyl substituiertes Phenyl, und X Wasserstoff, Halogen, Methyl oder Methoxy, und $A_1$ und $A_2$ unabhängig voneinander $C_1$-$C_6$-Alkyl, unsubstituiertes oder durch Halogen, $C_1$-$C_4$-Alkyl, Methoxy, Aethoxy, Phenyl oder Phenoxy substituiertes Phenyl bedeuten.

Besonders bevorzugt verwendet man Verbindungen der Formel I, worin D unsubstituiertes oder durch ein bis zwei gleiche oder verschiedene Substituenten der Gruppe bestehend aus Chlor, $C_1$-$C_3$-Alkyl, $C_1$-$C_3$-Alkoxy, Phenoxy, Cyano, Nitro, Phenylazo und Trifluormethyl substituiertes Phenyl, und X Wasserstoff, Chlor, Methyl oder Methoxy, und $A_1$ und $A_2$ unabhängig voneinander $C_1$-$C_3$-Alkyl, unsubstituiertes oder durch Chlor, $C_1$-$C_4$-Alkyl, Methoxy, Aethoxy oder Phenyl substituiertes Phenyl bedeuten.

Mit besonderem Interesse verwendet man Verbindungen der Formel I, worin D unsubstituiertes oder durch ein bis zwei gleiche oder verschiedene Substituenten der Gruppe bestehend aus Chlor, Methyl, Aethyl, Methoxy, Aethoxy, Phenoxy, Cyano, Nitro, Phenylazo und Trifluormethyl substituiertes Phenyl, und X Wasserstoff bedeuten, und $A_1$ und $A_2$ gleich sind und unsubstituiertes oder durch eine Methyl-, tert.-Butyl- oder Phenyl-Gruppe oder durch ein bis zwei Chloratome substituiertes Phenyl bedeuten.

Vor allem verwendet man Verbindungen der Formel I, worin D mit ein bis zwei Chlor substituiertes Phenyl und X Wasserstoff bedeuten, $A_1$ und $A_2$ gleich sind und unsubstituiertes oder durch ein Chlor substituiertes Phenyl bedeuten.

Die erfindungsgemäss zu verwendenden Verbindungen der Formel I können hergestellt werden, indem man beispielsweise ein Amin der Formel $DNH_2$, worin D die oben angegebene Bedeutung hat, diazotiert und mit einer Verbindung der Formel II kuppelt

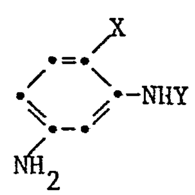

(II),

worin X die oben angegebene Bedeutung hat, und Y für Wasserstoff oder $-COA_1$ steht, wobei $A_1$ die oben angegebene Bedeutung hat, und die resultierende Mono- bzw. Diaminoazoverbindung mit einem entsprechenden aliphatischen Säurechlorid, Anhydrid oder mit einem unsubstituierten

oder durch Halogen, $C_1$-$C_4$-Alkyl, Methoxy, Aethoxy, Phenyl oder Phenoxy substituierten Benzoylchlorid bzw. einem Gemisch verschieden substituierter Benzoylchloride acyliert.

Beispiele für aliphatisches Säurechlorid, Anhydrid und substituiertes Benzoylchlorid sind Acetylchlorid, Propionylchlorid, Butyrylchlorid, Acetanhydrid, 2-Methylbenzoylchlorid, 3-Methylbenzoylchlorid, 4-Methylbenzoylchlorid, 2-Chlorbenzoylchlorid, 3-Chlorbenzoylchlorid, 4-Chlorbenzoylchlorid, 2,4-Dichlorbenzoylchlorid, 3,4-Dichlorbenzoylchlorid, 2,5-Dichlorbenzoylchlorid, 4-tert.-Butylbenzoylchlorid, 4-Methoxybenzoylchlorid und 4-Phenylbenzoylchlorid.

Die Acylierung kann in inerten Lösungsmitteln, wie Toluol, Xylol, Chlorbenzol, Dichlorbenzol oder in aromatischen Kohlewasserstoffgemischen bei erhöhter Temperatur, gegebenenfalls in Gegenwart eines Säureakzeptors, wie Triäthylamin, Pyridin, N,N-Dimethylanilin oder N,N-Diäthylanilin durchgeführt werden.

Ein weiterer Gegenstand der Erfindung betrifft die neuen Verbindungen der Formel I

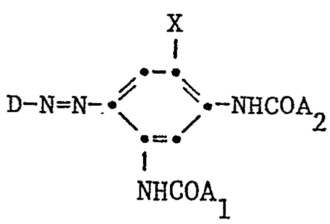

worin D den Rest einer carbocyclischen oder heterocyclischen Diazokomponente bedeutet, X Wasserstoff, Halogen, Methyl oder Methoxy bedeutet, $A_1$ und $A_2$ unabhängig voneinander unsubstituiertes oder durch Halogen, $C_1$-$C_4$-Alkyl, Methoxy, Aethoxy, Phenyl oder Phenoxy substituiertes Phenyl bedeuten.

Von besonderem Interesse sind Verbindungen der Formel I, worin D den Rest einer carbocyclischen Diazokomponente, insbesondere unsubstituiertes oder durch ein bis zwei gleiche oder verschiedene Substituenten der Gruppe bestehend aus Halogen, $C_1$-$C_6$-Alkyl, $C_1$-$C_6$-Alkoxy,

Phenoxy, Cyano, Nitro, Phenylazo und Trifluormethyl substituiertes Phenyl bedeutet, X, $A_1$ und $A_2$ die vorgängig für die neuen Verbindungen der Formel I angegebenen Bedeutungen haben.

In den neuen Verbindungen der Formel I können Halogen, $C_1$-$C_4$-Alkyl, $C_1$-$C_6$-Alkyl und $C_1$-$C_6$-Alkoxy die auf Seite 3 angegebenen Bedeutungen annehmen.

Organische Polymere, die mit den Verbindungen der Formel I gefärbt werden können, sind beispielsweise Celluloseäther und Celluloseester, wie Aethylcellulose, Celluloseacetat, Cellulosebutyrat, Polyurethane, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, wie Polystyrol und Styrolkopolymerisate wie ABS, Polyacrylsäureester, Gummi, Casein, Silikon und Silikonharze, insbesondere aber Polyester und Polyamide. Die genannten organischen Polymeren können einzeln oder in Mischungen gefärbt werden.

Als Polyester kommen insbesondere lineare Polyester in Frage, vor allem jene, die durch Polykondensation von Terephthalsäure oder deren Estern mit Glykolen der Formel $HO-(CH_2)_n-OH$, worin n eine Zahl von 2 bis 10 bedeutet, oder mit 1,4-Di-(hydroxymethyl)-cyclohexan oder durch Polykondensation von Glykoläthern von Hydroxybenzoesäuren, beispielsweise p-(β-Hydroxyäthoxy)-benzoesäure erhalten werden. Der Begriff lineare Polyester umfasst auch Kopolyester, die durch teilweisen Ersatz der Terephthalsäure durch eine andere Dicarbonsäure und/oder durch teilweisen Ersatz des Glykols durch ein anderes Diol erhalten werden. Von besonderem Interesse sind jedoch die Polyäthylenterephthalate.

Als Polyamide kommen insbesondere lineare Polyamide in Frage, wie sie beispielsweise aus ε-Caprolactam (Polyamid-6), aus ω-Aminoundecansäure (Polyamid-11), aus ω-Laurinlactam (Polyamid-12), aus Hexamethylendiamin und Adipinsäure (Polyamid-6,6) oder aus anderen aliphatischen oder auch aromatischen Ausgangsstoffen herstellbar sind. Ferner kommen auch Mischpolyamide in Betracht, beispielsweise aus ε-Caprolactam, Hexamethylendiamin und Adipinsäure. Von besonderem Interesse sind jedoch Polyamid-6 und Polyamid-6,6.

Zur Massefärbung werden die organischen Polymeren zweckmässig in Form von Pulvern, Schnitzeln oder Granulaten mit dem Farbstoff innig vermischt. Dies kann beispielsweise durch Beschichten der Polymerteilchen mit dem fein verteilten trocknen Farbstoffpulver oder durch Behandeln der Polymerteilchen mit einer Lösung bzw. Dispersion des Farbstoffes in einem organischen Lösungsmittel und nachheriger Entfernung des Lösungsmittels geschehen. Bezogen auf das zu färbende organische Polymere setzt man vorzugsweise 0,1 bis 10 Gew.-% des Farbstoffes der Formel I ein.

Die gefärbten polymeren Massen können nach bekannten Verfahren im Extruder geschmolzen und beispielsweise zu Folien oder Fasern ausgepresst oder zu Platten gegossen werden.

Die erhaltenen gelben Färbungen zeichnen sich durch grosse Farbstärke und Brillanz, hohe Licht-, Reib-, Thermofixier-, Nass- und Trockenreinigungsechtheit und Ausblutbeständigkeit, sowie durch gute Löslichkeit, Transparenz und Alkalibeständigkeit aus.

Die folgenden Beispiele erläutern die Erfindung.

Beispiel 1: Ein zur Faserherstellung geeignetes unmattiertes Polyäthylenterephthalat-Granulat wird in einem verschliessbaren Gefäss zusammen mit 1 Gew.-% des Farbstoffes der Formel

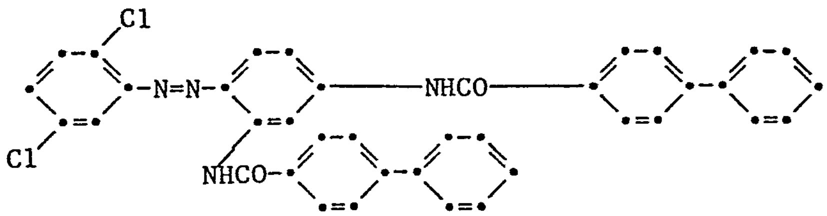

auf einer Schüttelmaschine 15 Minuten geschüttelt. Die gleichmässig gefärbten Granulatkörner werden auf einer Schmelzspinnanlage (285° ± 3°C, Verweilzeit in der Spinnmaschine ca. 5 Minuten) zu Fäden versponnen, die auf einer Streckzwirnanlage verstreckt und aufgespult werden. Man erhält eine lebhafte gelbe Färbung, die sich durch hervorragende Lichtechtheit, vorzügliche Wasch-, Trockenreinigungs-, Ueberfärbe- und Sublimationsechtheit,sowie hohe Chloritbleichebeständigkeit und sehr gute Reibechtheit nach Thermofixierung des gefärbten Materials auszeichnet.

Der in Beispiel 1 verwendete Farbstoff lässt sich durch Acylierung von 2,4-Diamino-2',5'-dichlorazobenzol mit Diphenylcarbonsäurechlorid in siedendem Chlorbenzol herstellen. Man erhält ihn in hoher Ausbeute in Form gelber Kristallnadeln vom Smp. 302°C.

Mikroanalyse:

| | | | | |
|---|---|---|---|---|
| Ber.: | C 71,14 | H 4,09 | Cl 11,05 | N 8,73 % |
| Gef.: | C 71,3 | H 4,1 | Cl 11,3 | N 8,8 % |

Beispiele 2 bis 111: Ebenfalls wertvolle Ausfärbungen erhält man bei sonst gleicher Arbeitsweise wie in Beispiel 1, wenn man an Stelle des in Beispiel 1 verwendeten Farbstoffes einen der in Tabelle 1 aufgeführten Farbstoffe einsetzt.

Tabelle 1

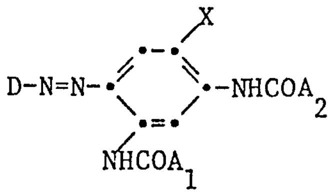

| Beisp. No. | D | $A_1 = A_2$ | X | Smp. °C | Nuance in PES |
|---|---|---|---|---|---|
| 2 | Phenyl | Phenyl | H | 232-33 | gelb |
| 3 | " | 3-Methylphenyl | H | 185-87 | gelb |
| 4 | " | 4-Methylphenyl | H | 247-49 | gelb |
| 5 | " | 4-Chlorphenyl | $-CH_3$ | 296-97 | gelb |
| 6 | 2-Chlorphenyl | Phenyl | H | 214-15 | gelb |
| 7 | " | 3-Methylphenyl | H | 214-15 | gelb |
| 8 | " | 4-Methylphenyl | H | 210-11 | gelb |
| 9 | " | 4-Chlorphenyl | H | 239-40 | gelb |
| 10 | " | 4-tert.Butyl-phenyl | H | 170-72 | gelb |
| 11 | " | 4-Phenylphenyl | H | 233-34 | gelb |
| 12 | 3-Chlorphenyl | Phenyl | H | 212-14 | gelb |
| 13 | " | 3-Methylphenyl | H | 179-80 | gelb |
| 14 | " | 4-Methylphenyl | H | 239-40 | gelb |
| 15 | " | 4-Chlorphenyl | H | 255-56 | gelb |
| 16 | " | 4-Phenylphenyl | H | 300-01 | gelb |
| 17 | 4-Chlorphenyl | Phenyl | H | 258-59 | gelb |
| 18 | " | 3-Methylphenyl | H | 210-11 | gelb |
| 19 | " | 4-Methylphenyl | H | 258-59 | gelb |
| 20 | " | 4-tert.Butyl-phenyl | H | 216-17 | gelb |
| 21 | " | 4-Chlorphenyl | H | 259-61 | gelb |
| 22 | " | 4-Phenylphenyl | H | 285-86 | gelb |
| 23 | 2,3-Dichlorphenyl | Phenyl | H | 252-53 | gelb |
| 24 | " | 3-Methylphenyl | H | 236-37 | gelb |
| 25 | " | 4-tert.Butyl-phenyl | H | 146-49 | gelb |

Tabelle 1 (Fortsetzung)

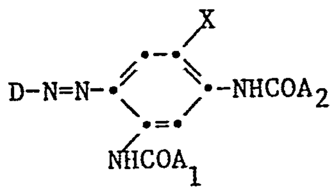

| Beisp. No. | D | $A_1$ = $A_2$ | X | Smp. °C | Nuance in PES |
|---|---|---|---|---|---|
| 26 | 2,3-Dichlorphenyl | 4-Chlorphenyl | H | 251-52 | gelb |
| 27 | " | 4-Phenylphenyl | H | 260-61 | gelb |
| 28 | 2,5-Dichlorphenyl | Phenyl | H | 254-55 | gelb |
| 29 | " | 3-Methylphenyl | H | 217-18 | gelb |
| 30 | " | 4-Methylphenyl | H | 244-45 | gelb |
| 31 | " | 4-tert.Butyl-phenyl | H | 254-57 | gelb |
| 32 | " | 4-Chlorphenyl | H | 251-52 | gelb |
| 33 | 3,4-Dichlorphenyl | 3-Methylphenyl | H | 248-55 | gelb |
| 34 | " | 4-tert.Butyl-phenyl | H | 198-201 | gelb |
| 35 | 3,5-Dichlorphenyl | 3-Methylphenyl | H | 190-91 | gelb |
| 36 | " | 4-Methylphenyl | H | 239-40 | gelb |
| 37 | " | 4-tert.Butyl-phenyl | H | 219-20 | gelb |
| 38 | 2,4-Dimethylphenyl | 4-Methylphenyl | H | 202-03 | gelb |
| 39 | " | 4-tert.Butyl-phenyl | H | 155-59 | gelb |
| 40 | " | 4-Phenylphenyl | H | 243-44 | gelb |
| 41 | 3-Chlor-2-methylphenyl | 3-Methylphenyl | H | 164-65 | gelb |
| 42 | 2-Chlor-5-methylphenyl | Phenyl | H | 203 | gelb |
| 43 | 2-Chlor-4-methylphenyl | Phenyl | H | 233-34 | gelb |
| 44 | 3-Chlor-4,6-dimethyl-phenyl | Phenyl | H | 262-63 | gelb |
| 45 | " | 3-Methylphenyl | H | 221-22 | gelb |
| 46 | 3-Chlor-4,6-dimethoxy-phenyl | 4-Chlorphenyl | H | 295 | gelb |
| 47 | 4-Phenoxy-phenyl | Phenyl | H | 243-44 | gelb |
| 48 | " " | 3-Methylphenyl | H | 185-90 | gelb |

Tabelle 1 (Fortsetzung)

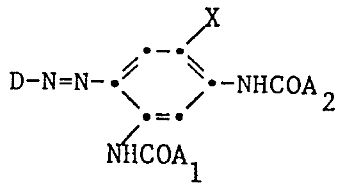

| Beisp. No. | D | $A_1 = A_2$ | X | Smp. °C | Nuance in PES |
|---|---|---|---|---|---|
| 49 | 4-Phenoxy-phenyl | 4-Methylphenyl | H | 234-40 | gelb |
| 50 | " " | 4-Chlorphenyl | H | 243-44 | gelb |
| 51 | 4-Chlor-2-cyanphenyl | 4-Methoxyphenyl | H | 273-74 | gelb-orange |
| 52 | 4-Methylaminocarbonyl-phenyl | Phenyl | H | 307-08 | gelb |
| 53 | " " | 4-Chlorphenyl | H | > 310 | gelb |
| 54 | 1-Naphthyl | 4-Methylphenyl | H | 208-09 | gelb |
| 55 | " | 4-Phenylphenyl | H | 265-66 | gold-gelb |
| 56 | 4-Nitrophenyl | Phenyl | H | 293-94 | orange |
| 57 | " | 4-Chlorphenyl | H | 313-14 | orange |
| 58 | " | 3-Methylphenyl | H | 235-36 | orange |
| 59 | 3-Nitrophenyl | Phenyl | H | 258-60 | gelb |
| 60 | " | 4-Chlorphenyl | H | > 300 | gelb |
| 61 | " | 3-Methylphenyl | H | 209-11 | gelb |
| 62 | 2-Nitrophenyl | Phenyl | H | 212-14 | rotstichig gelb |
| 63 | " | 4-Chlorphenyl | H | 244-46 | gelb |
| 64 | " | 3-Methylphenyl | H | 194-96 | rotstichig gelb |
| 65 | 2-Cyanphenyl | 4-Chlorphenyl | H | 257-59 | rotstichig gelb |
| 66 | 4-Cyanphenyl | Phenyl | H | 267-69 | rotstichig gelb |

Tabelle 1 (Fortsetzung)

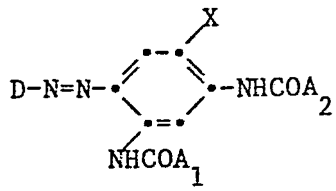

| Beisp. No. | D | $A_1 = A_2$ | X | Smp. °C | Nuance in PES |
|---|---|---|---|---|---|
| 67 | 4-Cyanphenyl | 4-Chlorphenyl | H | >300 | rotstichig gelb |
| 68 | " | 3-Methylphenyl | H | 234-36 | gelb |
| 69 | 2-Methylphenyl | Phenyl | H | 213-41 | gelb |
| 70 | " | 4-Chlorphenyl | H | 217-19 | gelb |
| 71 | " | 3-Methylphenyl | H | 175-76 | gelb |
| 72 | " | 4-Methylphenyl | H | 196-97 | gelb |
| 73 | 3-Methylphenyl | Phenyl | H | 190-92 | gelb |
| 74 | " | 4-Chlorphenyl | H | 243-45 | gelb |
| 75 | " | 3-Methylphenyl | H | 168-70 | gelb |
| 76 | " | 4-Methylphenyl | H | 219-21 | gelb |
| 77 | 4-Methylphenyl | Phenyl | H | 217-19 | gelb |
| 78 | " | 4-Chlorphenyl | H | 242-45 | gelb |
| 79 | " | 3-Methylphenyl | H | 198-200 | gelb |
| 80 | " | 4-Methylphenyl | H | 243-45 | gelb |
| 81 | 4-Aethylphenyl | Phenyl | H | 229-31 | gelb |
| 82 | " | 4-Chlorphenyl | H | 243-45 | gelb |
| 83 | " | 3-Methylphenyl | H | 225-30 | gelb |
| 84 | 2-Trifluormethylphenyl | Phenyl | H | 205-07 | gelb |
| 85 | " | 4-Chlorphenyl | H | 218-20 | gelb |
| 86 | 3-Trifluormethylphenyl | Phenyl | H | 227-29 | gelb |
| 87 | " | 4-Chlorphenyl | H | 223-25 | gelb |
| 88 | 4-Methoxyphenyl | Phenyl | H | 234-35 | gelb |
| 89 | " | 4-Chlorphenyl | H | 243-44 | gelb |
| 90 | " | 3-Methylphenyl | H | 201-02 | gelb |

Tabelle 1 (Fortsetzung)

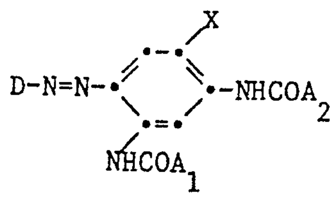

| Beisp. No. | D | $A_1 = A_2$ | X | Smp. °C | Nuance in PES |
|---|---|---|---|---|---|
| 91 | 4-Aethoxyphenyl | Phenyl | H | 242-43 | gelb |
| 92 | " | 4-Chlorphenyl | H | 268-70 | gelb |
| 93 | " | 3-Methylphenyl | H | 204-05 | gelb |
| 94 | 4(4'-Chlorphenoxy)-phenyl | Phenyl | H | 237-39 | gelb |
| 95 | " | 4-Chlorphenyl | H | 221-23 | gelb |
| 96 | 2,3-Dimethylphenyl | Phenyl | H | 199-200 | gelb |
| 97 | " | 4-Chlorphenyl | H | 218-19 | gelb |
| 98 | " | 4-Methoxyphenyl | H | 212-14 | gelb |
| 99 | 2-Chlorphenyl | 4-Methoxyphenyl | H | 188-90 | gelb |
| 100 | 2,4-Dichlorphenyl | 4-Chlorphenyl | H | 277-78 | gelb |
| 101 | 2,5-Dichlorphenyl | 2,5-Dichlor-phenyl | H | 259-60 | gelb |
| 102 | " | 2,4-Dichlor-phenyl | H | 257-58 | gelb |
| 103 | 2,4-Dimethyl-5-chlor-phenyl | 3-Methylphenyl | H | 221-22 | gelb |
| 104 | 4-Phenylazophenyl | Phenyl | H | 269-70 | orange |
| 105 | " | 4-Chlorphenyl | H | 318-19 | orange |
| 106 | " | 3-Methylphenyl | H | 237-38 | orange |
| 107 | 2-Chlorphenyl | Phenyl | Cl | 252-53 | gelb |
| 108 | " | 4-Chlorphenyl | Cl | 273-74 | gelb |
| 109 | " | 3-Methylphenyl | Cl | 233-34 | gelb |
| 110 | " | 4-Methoxyphenyl | Cl | 245-46 | gelb |
| 111 | 2-Amino-6-äthoxy-benzthiazolyl | 4-Chlorphenyl | H | 233-35 | braun-rot |

Beispiel 112: 99 Gew.-Teile Polyamid-6 werden in Form von Schnitzeln mit 1 Gew.-Teil des fein verteilten Farbkörpers vom Smp. 218-219°C der Formel

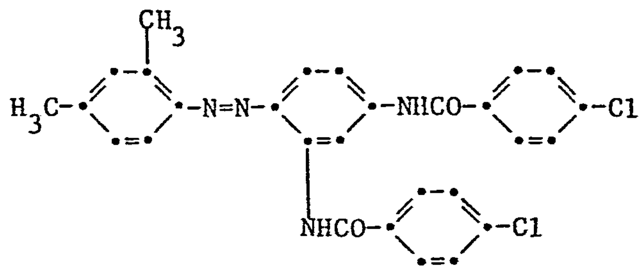

analog zu Beispiel 1 trocken beschichtet und bei 280-285°C auf einer Schmelzspinnanlage zu Fäden versponnen. Man erhält eine intensive gelbe, reine Färbung, welche sich durch vorzügliche Echtheitseigenschaften auszeichnet.

Beispiel 113-124: Ebenfalls wertvolle Ausfärbungen erhält man bei sonst gleicher Arbeitsweise wie in Beispiel 112, wenn man an Stelle des in Beispiel 112 verwendeten Farbstoffes einen der in Tabelle 2 aufgeführten Farbstoffe einsetzt.

Tabelle 2

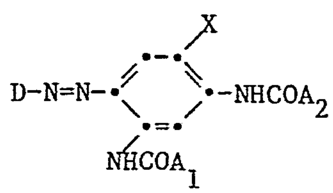

| Beisp. No. | D | $A_1 = A_2$ | X | Smp. °C | Nuance in Polyamid-6 |
|---|---|---|---|---|---|
| 113 | Phenyl | 3-Methylphenyl | H | 185-87 | gelb |
| 114 | 4-Chlorphenyl | 3-Methylphenyl | H | 210-11 | gelb |
| 115 | 2,3-Dichlorphenyl | Methyl | H | 251-52 | gelb |
| 116 | 2,4-Dichlorphenyl | 4-Methylphenyl | H | 259-60 | gelborange |
| 117 | 3,4-Dichlorphenyl | 4-Methylphenyl | H | 266-67 | gelb |
| 118 | 3,5-Dichlorphenyl | Methyl | H | > 310 | gelb |
| 119 | 2,4-Dimethylphenyl | Phenyl | H | 199-200 | gelb |
| 120 | 2,4-Dimethylphenyl | Methyl | H | 239-40 | gelb |
| 121 | Phenyl | 4-Methylphenyl | $CH_3$ | 267-70 | gelb |
| 122 | 2-Chlorphenyl | 2-Chlorphenyl | H | 117-122 | gelb |
| 123 | 1-Naphthyl | 3-Methylphenyl | H | 202-203 | rotstichig gelb |
| 124 | 2-Trifluormethyl-phenyl | 4-Chlorphenyl | H | 218-220 | gelb |

Beispiel 125: 1 Gew.-% des Farbstoffs der Formel

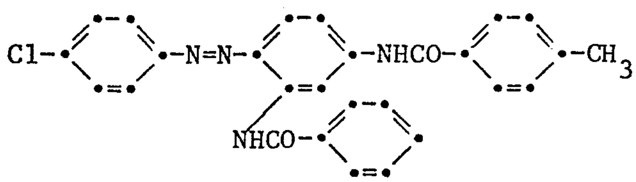

vom Smp. 251-253°C wird gemäss Beispiel 1 in Polyäthylenterephthalat zu gefärbtem Fasermaterial versponnen. Es resultiert eine farbstarke, reine gelbe Färbung, welche vorzügliche Echtheitseigenschaften aufweist.

Der Farbstoff der obigen Konstitution kann in einfacher Weise durch Acylierung von 4-Amino-2-benzoylamino-4'-chlorazobenzol mit 4-Toluylsäurechlorid erhalten werden.

Beispiel 126: Der Farbstoff der Formel

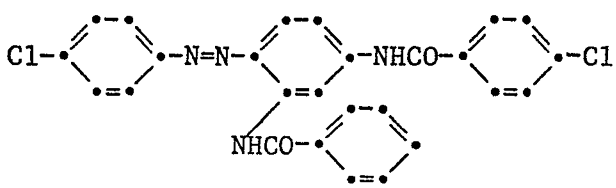

vom Smp. 230-32°C führt bei der Applikation in PES in zu Beispiel 125 analoger Weise zu echten, gelben Färbungen.

Beispiel 127: 1 Gew.-Teil des Farbstoffes gemäss Beispiel 28, sowie 10 Gew.-Teile Titandioxid (KRONOS Titanweiss RN 56 P®) werden mit 100 Gew.-Teilen Polystyrolgranulat (Polystyrol 165 H BASF®) in einem geschlossenen Gefäss auf dem Rollbock 15 Minuten gemischt und hernach zweimal bei 200°C extrudiert und granuliert.

Das gefärbte Granulat wird auf einem Spritzgussautomaten zu Platten verspritzt. Man erhält farbstarke, rotstichig gelb gefärbte Formlinge.

Weniger rotstichige Färbungen resultieren bei analoger Applikation des Farbstoffs gemäss Beispiel 9.

Beispiel 128: 1 Gew.-Teil des Farbstoffs gemäss Beispiel 9 wird mit 10 Gew.-Teilen Titandioxid (KRONOS Titanweiss RN 56 P®) und mit 100 Gew.-Teilen ABS-Mischpolymerisat (Teluran 877 T®) nach der Methode von Beispiel 127 verarbeitet, wobei man gelbgefärbte Formlinge erhält.

Beispiel 129: 1 Gew.-Teil des Farbstoffs gemäss Beispiel 1 und 10 Gew.-Teile Titandioxid (KRONOS Titanweiss RN 56 P®) werden mit 1000 Gew.-Teilen Niederdruckpolyäthylen in einem hochtourigen Dispergieraggregat ("Gelimat") vermischt und hernach bei 200°C zu Platten gepresst. Man erhält gelbgefärbte Formlinge.

Beispiel 130: Zu einer Lösung von 4,95 g 2-Chlor-2',4'-diaminoazobenzol in 50 ml Chlorbenzol wird bei 100-110°C ein Gemisch von 3,1 g Benzoylchlorid und 3,85 g 4-Chlorbenzoylchlorid in 20 ml Chlorbenzol innerhalb 15 Minuten zugetropft. Die dabei resultierende Suspension wird auf Rückflusstemperatur erwärmt und 6 Stunden bei dieser Temperatur verrührt, wobei sich eine braungelbe Lösung bildet. Beim Abkühlen auf Raumtemperatur fällt ein gelbes kristallines Produkt aus, welches abgesaugt und nacheinander in wenig Chlorbenzol, dann gründlich mit Alkohol, 2 gew-%iger Natriumcarbonatlösung und schliesslich mit Wasser gewaschen und bei 80°C im Vakuum getrocknet wird. Man erhält 7,4 g eines Acylierungsgemisches mit einem Schmelzintervall von 180-211°C, welches bei der Applikation in PES gemäss Beispiel 1 gelbe Färbungen erzeugt, welche sich durch gute Echtheitseigenschaften auszeichnen.

Beispiel 131: Analog den Angaben von Beispiel 130 werden 4,95 g 2-Chlor-2',4'-diaminoazobenzol mit einem Gemisch von 5,1 g 4-Methylbenzoylchlorid und 1,92 g 4-Chlorbenzoylchlorid acyliert. Man erhält 7 g eines kristallinen gelben Farbkörpergemisches mit einem Schmelzintervall von 175-209°C, welches bei der Applikation in PES gelbe Färbungen erzeugt, die sich durch gute Echtheiten auszeichnen.

Patentansprüche

1. Verfahren zum Färben von organischen Polymeren in der Masse, dadurch gekennzeichnet, dass man eine Azoverbindung der Formel I verwendet

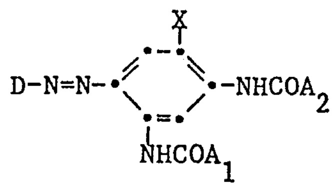

(I),

worin D den Rest einer carbocyclischen aromatischen oder heterocyclischen aromatischen Diazokomponente bedeutet, X Wasserstoff, Halogen, Methyl oder Methoxy bedeutet, und $A_1$ und $A_2$ unabhängig voneinander $C_1$-$C_6$-Alkyl, unsubstituiertes oder durch Halogen, $C_1$-$C_4$-Alkyl, Methoxy, Aethoxy, Phenyl oder Phenoxy substituiertes Phenyl bedeutet.

2. Verfahren gemäss Anspruch 1, dadurch gekennzeichnet, dass man eine Azoverbindung der Formel I verwendet, worin D den Rest einer carbocyclischen aromatischen Diazokomponente bedeutet.

3. Verfahren gemäss Anspruch 1, dadurch gekennzeichnet, dass man eine Azoverbindung der Formel I verwendet, worin D unsubstituiertes oder durch ein bis zwei gleiche oder verschiedene Substituenten der Gruppe bestehend aus Halogen, $C_1$-$C_6$-Alkyl, $C_1$-$C_6$-Alkoxy, Phenoxy, Cyano, Nitro, Phenylazo und Trifluormethyl substituiertes Phenyl, und X Wasserstoff, Halogen, Methyl oder Methoxy, und $A_1$ und $A_2$ unabhängig voneinander $C_1$-$C_6$-Alkyl, unsubstituiertes oder durch Halogen, $C_1$-$C_4$-Alkyl, Methoxy, Aethoxy, Phenyl oder Phenoxy substituiertes Phenyl bedeuten.

4. Verfahren gemäss Anspruch 1, dadurch gekennzeichnet, dass man eine Azoverbindung der Formel I verwendet, worin D unsubstituiertes oder durch ein bis zwei gleiche oder verschiedene Substituenten der Gruppe bestehend aus Chlor, $C_1$-$C_3$-Alkyl, $C_1$-$C_3$-Alkoxy, Phenoxy, Cyano, Nitro, Phenylazo und Trifluormethyl substituiertes Phenyl, und X Wasserstoff,

Chlor, Methyl oder Methoxy, und $A_1$ und $A_2$ unabhängig voneinander $C_1$-$C_3$-Alkyl, unsubstituiertes oder durch Chlor, $C_1$-$C_4$-Alkyl, Methoxy, Aethoxy oder Phenyl substituiertes Phenyl bedeuten.

5. Verfahren gemäss Anspruch 1, dadurch gekennzeichnet, dass man eine Azoverbindung der Formel I verwendet, worin D unsubstituiertes oder durch ein bis zwei gleiche oder verschiedene Substituenten der Gruppe bestehend aus Chlor, Methyl, Aethyl, Methoxy, Aethoxy, Phenoxy, Cyano, Nitro, Phenylazo und Trifluormethyl substituiertes Phenyl, und X Wasserstoff bedeuten, und $A_1$ und $A_2$ gleich sind und unsubstituiertes oder durch eine Methyl-, tert.-Butyl- oder Phenyl-Gruppe oder durch ein bis zwei Chloratome substituiertes Phenyl bedeuten.

6. Verfahren gemäss Anspruch 1, dadurch gekennzeichnet, dass man eine Azoverbindung der Formel I verwendet, worin D mit ein bis zwei Chlor substituiertes Phenyl und X Waserstoff bedeuten, $A_1$ und $A_2$ gleich sind und unsubstituiertes oder durch ein Chlor substituiertes Phenyl bedeuten.

7. Organische Polymere, enthaltend eine Azoverbindung der Formel I nach Anspruch 1.

8. Lineare Polyester, enthaltend eine Azoverbindung der Formel I nach Anspruch 1.

9. Lineare Polyamide, enthaltend eine Azoverbindung der Formel I nach Anspruch 1.

10. Verbindungen der Formel I

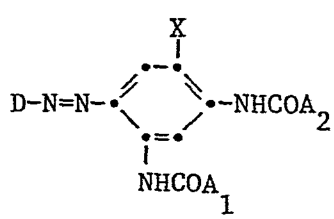

worin D den Rest einer carbocyclischen oder heterocyclischen Diazokomponente bedeutet, X Wasserstoff, Halogen, Methyl oder Methoxy bedeutet, $A_1$ und $A_2$ unabhängig voneinander unsubstituiertes oder durch Halogen, $C_1$-$C_4$-Alkyl, Methoxy, Aethoxy, Phenyl oder Phenoxy substituiertes Phenyl bedeuten.

11. Verbindungen der Formel I gemäss Anspruch 9, worin D den Rest einer carbocyclischen Diazokomponente bedeutet.

12. Verbindungen der Formel I gemäss Anspruch 9, worin D unsubstituiertes oder durch ein bis zwei gleiche oder verschiedene Substituenten der Gruppe bestehend aus Halogen, $C_1$-$C_6$-Alkyl, $C_1$-$C_6$-Alkoxy, Phenoxy, Cyano, Nitro, Phenylazo und Trifluormethyl substituiertes Phenyl bedeutet.

Europäisches Patentamt

# EUROPÄISCHER RECHERCHENBERICHT

0079859
Nummer der Anmeldung

EP 82 81 0482

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 3) |
|---|---|---|---|
| X | US-A-3 904 596 (J. BLACKWELL et al.) * Ansprüche; Spalte 4, Zeile 25 - Spalte 5, Zeile 2; Spalte 6, Tabelle 4 * | 10-12 | C 08 K 5/00<br>C 08 K 5/23<br>C 09 B 43/132 |
| P | EP-A-0 045 354 (CASSELLA AG) * Tabellen 1,2,4,9 * | 10-12 | |
| A | FR-A-2 003 537 (AGFA-GEVAERT AG) * Anspruch 1; Farbstoffe 37,47,52 * | 10,11 | |
| A,D | GB-A-2 030 166 (I.C.I.) * Anspruch 1; Seite 2, Zeile 20 * | 1 | |

RECHERCHIERTE SACHGEBIETE (Int. Cl. 3)

C 08 K
C 08 L
C 09 B

Der vorliegende Recherchenbericht wurde für alle Patentansprüche erstellt.

| Recherchenort | Abschlußdatum der Recherche | Prüfer |
|---|---|---|
| DEN HAAG | 16-02-1983 | HOFFMANN K.W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument